# EUROPÄISCHE PATENTSCHRIFT

(11) **EP 4 052 322 B1**
(45) Veröffentlichungstag und Bekanntmachung des Hinweises auf die Patenterteilung: **12.06.2024**
(21) Anmeldenummer: 20796524.5
(22) Anmeldetag: 19.10.2020
(51) Int. Cl.: H01M 10/48, H01M 50/249, H01M 50/342, H01M 50/367, H01M 50/578, H01M 50/581, H01M 50/213, H01M 50/227, H01M 50/293, H01M 50/529

(54) **BATTERIEMODUL MIT ÜBERWACHUNG DES THERMISCHEN DURCHGEHENS VON EINZELNEN ZELLEN**
BATTERY MODULE WITH MONITORING OF THERMAL RUNAWAY OF INDIVIDUAL CELLS
MODULE DE BATTERIE AVEC SURVEILLANCE DE L'EMBALLEMENT THERMIQUE D'ÉLÉMENTS INDIVIDUELS

(30) Priorität: 29.10.2019 DE 102019216608
(43) Veröffentlichungstag der Anmeldung: 07.09.2022
(73) Patentinhaber: thyssenkrupp Marine Systems GmbH, 24143 Kiel (DE); thyssenkrupp AG, 45143 Essen (DE)
(72) Erfinder: PEIN, Marc, 24147 Kiel (DE)
(74) Vertreter: thyssenkrupp Intellectual Property GmbH
(86) Internationale Anmeldenummer: PCT/EP2020/079355
(87) Internationale Veröffentlichungsnummer: WO 2021/083703

(56) Entgegenhaltungen:
- EP-A1- 2 259 365
- WO-A1-2011/101942
- DE-A1-102011 054 775
- DE-A1-102013 201 007
- DE-A1-102014 221 272
- DE-A1-102019 106 356
- US-A1- 2014 222 359
- US-A1- 2014 308 550
- US-A1- 2016 218 533
- US-A1- 2017 012 268

## Beschreibung

Die Erfindung betrifft ein Batteriemodul insbesondere für Akkumulatoren auf Lithium-Basis mit Sensoren zur Detektion eines thermischen Durchgehens wenigstens einer Zelle des Batteriemoduls.

Akkumulatoren auf Lithium-Basis sind zunehmend interessant, beispielsweise aufgrund der hohen Energiedichte. Gerade für große Energiespeicher gibt es jedoch zwei grundlegende Unterschiede beispielsweise zum Blei-Schwefelsäure-Akkumulator. Zum einen können die einzelnen Zellen nicht einfach beliebig vergrößert werden. Dieses führt dazu, dass regelmäßig eine Vielzahl von Akkumulatoren zu einem größeren Modul zusammengestellt werden. Zum anderen ist gerade bei diesen Akkumulatoren das Problem des thermischen Durchgehens gegeben, gerade wenn diese im Ladevorgang oder Entladevorgang überhitzen und dadurch chemische Reaktionen gestartet werden, die unter anderem zu einer starken Gasentwicklung führt. Da hierbei auch eine große Menge an Gas, oftmals selbst gefährlicher oder entzündlicher Gase, entsteht und sich somit das Volumen dramatisch vergrößert, bedeutet dieses ein großes Risiko, insbesondere in kritischen oder geschlossenen Umgebungen, wie sich beispielsweise an Akkumulatoren in Luftfahrzeugen gezeigt hat.

Aus der US 2014 / 0 308 550 A1 offenbart ein Batteriemodul mit einer Mehrzahl an Sekundärzellen.

Aus der JP 2007 027 011 A eine Energieversorgungsvorrichtung mit Batterien in einem Gehäuse.

Aus der DE 10 2008 013 188 A1 ist ein elektrochemischer Akkumulator und ein Fahrzeug mit einem elektrochemischen Akkumulator bekannt.

Aus der DE 10 2014 006 807 A1 ist ein Batteriesystem mit einer Sensorvorrichtung bekannt.

Aus der JP 02 174 077 A ist ein Festkörperakkumulator bekannt.

Aus der DE 10 2017 214 289 A1 ist ein Batteriemodul und ein Fahrzeug mit dem Batteriemodul bekannt.

Aus der DE 10 2013 201 007 A1 ist ein Batteriemodul und ein Batteriesystem bekannt.

Aus der WO 2011 / 101 942 A1 ist ein Batteriemodul bekannt.

Aus der US 2017 / 012 268 A1 ist eine Konstruktionseinheit bekannt.

Aus der DE 10 2011 054 775 A1 ist ein Druckausgleichsystem für ventilgesteuerte Batterien bekannt.

Aus der DE 10 2014 221 272 A1 ist eine Überwachungseinrichtung für eine Batterie sowie ein Überwachungsverfahren bekannt.

Aus der US 22016 / 218 533 A1 ist eine Leiterplatte für einen Akkumulator und ein Batterieelement mit der Leiterplatte bekannt.

Aus der EP 2 259 365 A1 ist eine Vorrichtung zur Erfassung von Abnormalitäten in einem Akkumulator bekannt.

Aus der DE 10 2019 106 356 A1 ist ein Rauchgaserfassungssystem und ein Rauchgaserfassungsverfahren bekannt.

Aus der US 2014 / 222 359 A1 ist eine Überwachungs- und Speichervorrichtung für eine Batterie bekannt.

Aufgabe der Erfindung ist es, ein Batteriemodul zur Verfügung zu stellen, welches im Falle eines thermischen Durchgehens diesen Zwischenfall detektiert.

Gelöst wird diese Aufgabe durch das Batteriemodul mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Batteriemodul weist wenigstens einen ersten Akkumulator und einen zweiten Akkumulator auf. Alle Akkumulatoren weisen wenigstens zwei elektrische Kontakte auf. Weiter weisen alle Akkumulatoren eine Berstmembran auf. Alle Berstmembranen sind in die gleiche Richtung angeordnet sind. Hierdurch kann die elektrische Energie zentral auf einer Seite abgeführt werden.

Alle Akkumulatoren sind in einem Modulgehäuse angeordnet. Wenigstens ein erster Sensor ist in Wirkrichtung hinter der Berstmembran der Akkumulatoren angeordnet. Der erste Sensor ist zur Erfassung der Temperatur ausgebildet.

In Wirkrichtung hinter ist im Sinne der Erfindung so zu verstehen, dass der erste Sensor in dem Bereich angeordnet ist, in welchen nach dem Bersten der Berstmembran des Akkumulators die Gase hin entweichen, in welche Richtung also der Druck hin abgeführt wird. Somit umfasst in Wirkrichtung hinter nicht nur den Bereich unmittelbar hinter der Berstmembran des Akkumulators, sondern umfasst auch Bereiche, in welche das austretende Gas gegebenfalls umgelenkt wird.

Durch die Anordnung aller Akkumulatoren in dem Modulgehäuse sind alle Akkumulatoren gegenüber der Umgebung geschützt. Kommt es nun zum thermischen Durchgehen eines Akkumulators, so produziert dieser großen Mengen heißer Gase, welche bei direkten Kontakt leicht dazu führen können, dass benachbarte Akkumulatoren ebenfalls kritisch werden und selber thermischen durchgehen. Da die Akkumulatoren jedoch innerhalb des Modulgehäuses geschützt sind, kann ein einzelner durchgehender Akkumulator nicht benachbarte Akkumulatoren ebenfalls kritisch werden lassen. Ein einfaches und vollständiges Einbauen würde jedoch dazu führen, dass der entstehende Druck nicht abgeführt werden kann. Kommt es bei einem einzelnen Akkumulator nun zu einem thermischen Durchgehen, so entsteht im Inneren des Akkumulators ein Druck, dieser lässt die Berstmembran bersten.

Das Modulgehäuse weist wenigstens einen ersten Gaskanal auf, wobei der erste Gaskanal in Wirkrichtung hinter den Berstmembranen der Akkumulatoren angeordnet ist. Ein erster Gaskanal hat den Vorteil, dass es mit dem ersten Gaskanal möglich ist, die entstehenden Gase zu lenken und von anderen Akkumulatoren fortzuführen und so eine thermische Belastung weiterer Akkumulatoren oder eine chemische Reaktion zwischen den Gasen und den nicht betroffenen Akkumulatoren zu vermeiden. Besonders bevorzugt hat der Gaskanal einen Ausgang. Bevorzugt ist dieser Ausgang des Gaskanals an der Oberseite des Modulgehäuses angeordnet.

Erfindungsgemäß ist der erste Sensor und ein zweiter Sensor im ersten Gaskanal angeordnet, wobei der zweite Sensor zur Erfassung der Temperatur ausgebildet ist. Aus dem maximalen Meßwert, beispielsweise der Höchsttemperatur, und/oder der Steigung des Anstieges, beispielsweise von der

Temperatur kann auf die Entfernung zum Akkumulator geschlossen werden und so der Akkumulator ermittelt werden, bei dem ein thermisches Durchgehen erfolgt ist. Erfindungsgemäß sind der erste Sensor und der zweite Sensor zueinander beabstandet im ersten Gaskanal angeordnet. Hier ergibt sich eine einfachere Auswertung, da aus der Zeitdifferenz zwischen den beiden Signalen auf den Ort des Ursprungs und somit auf den defekten Akkumulator geschlossen werden kann. Hierzu können der erste Sensor und der zweite Sensor in einer möglichen Ausführungsform an den gegenüberliegenden Enden des ersten Gaskanals angeordnet. Dazu sind der erste Sensor und der zweite Sensor bevorzugt gleichartig aufgebaut, wobei sie die gleiche Größe messen. Der erste und der zweite Sensor können also beispielsweise die Temperatur messen.

In einer weiteren Ausführungsform der Erfindung sind der erste Sensor und der zweite Sensor redundant ausgeführt. Dieses bedeutet, dass der erste Sensor aus zwei voneinander unabhängigen Sensoren besteht, die beide bevorzugt unabhängig voneinander mit einer Auswerteeinheit, bevorzugt einem Modul-Batteriemanagementsystem verbunden sind. Ebenso ist der zweite Sensor aus zwei voneinander unabhängigen Sensoren besteht, die beide bevorzugt unabhängig voneinander mit einer Auswerteeinheit, bevorzugt einem Modul-Batteriemanagementsystem verbunden sind.

Der Gaskanal kann an seinem oberen Ende eine Gaskanalberstmembran aufweisen, die sich bei austretendem Gas öffnet. Eine solche Gaskanalberstmembran hat den Vorteil, dass einerseits keine Fremdkörper in den Gaskanal eintreten können und andererseits, dass sich das erwärmte, austretende Gas vor dem oberen Sensor staut und dort die Detektion eines Temperaturanstiegs erleichtert.

Erfindungsgemäß ist der erste Sensor am Ausgang des ersten Gaskanals angeordnet. Weiter weisen der erste Sensor und der zweite Sensor wenigstens eine Distanz der halben Länge des ersten Gaskanals auf. Diese Ausführungsform ist vorteilhaft um gerade Zwischenfälle detektieren zu können, auch wenn diese, beispielsweise auf Grund eines geringen Ladezustandes eines Akkumulators vergleichsweise moderat abläuft. Wird beispielsweise die Temperatur detektiert, so kommt zusätzlich dazu, dass das aus einem Akkumulator entweichende Gas bereits durch das umgebende Modul vor Erreichen eines der Sensoren durch die Wärmekapazität des Moduls soweit abgekühlt sein kann, dass das austretende Gas so weit abgekühlt wurde, dass ein Zwischenfall durch einen Sensor nicht erfassbar ist. Daher ist die gewählte Anordnung der beiden Sensoren vorteilhaft, da so die Distanz zu den Sensoren vorzugsweise auf maximal die halbe Distanz der Länge des Gaskanals begrenzt wird.

In einer Weiterbildung der Ausführungsform sind die Sensoren so am Modul angeordnet, dass sie sowohl den Temperaturanstieg des Gases als auch einen Temperaturanstieg im Modul. Dazu können die Sensoren an der modulseitigen Wand des Gaskanals angeordnet sein und thermisch mit dieser so verbunden oder gekoppelt sein, dass ein Temperaturanstieg im Modul erfasst wird. Eine derartige Kopplung kann beispielsweise durch Einbetten der Module in eine wärmeleitende Vergussmasse erreicht werden, die die Wärme im Modul bis an die Außenseite des Moduls leitet. Dieses hat den Vorteil, dass eine Fehlfunktion einer Batterie sowohl beim Austreten von Gas oder bereits vorher erfasst werden kann. Es kann vorkommen, dass eine Batterie zwar eine Fehlfunktion aufweist, aber kein Gas austritt. Bei einer solchen Fehlfunktion erhitzt sich die Batterie stark und erwärmt die Umgebung. Dieses würde durch die Anordnung von Temperatursensoren erfasst, ohne dass jedes Modul eines einzelnen Temperatursensors der Überwachung bedarf. Im Unterschied zum Gasaustritt ist dann der Temperaturanstieg am Sensor jedoch schwach und langsam, dafür auch von längerer Dauer, während die heißen Gase einen raschen starken Temperaturanstieg verursachen und nach dem Entweichen aber auch einen ebenso raschen Rückgang. Durch diese Anordnung von Temperatursensoren kann also mit wenigen Sensoren mehrere Fehlerzustände überwacht werden.

In einer weiteren Ausführungsform der Erfindung ist der erste Sensor zur Erfassung einer chemischen Substanz ausgebildet ausgewählt aus der Gruppe umfassend Wasserstoff und Kohlenmonoxid.

In einer weiteren Ausführungsform der Erfindung weisen alle Akkumulatoren eine zylindrische Bauform auf. Das bedeutet, die einzelnen Akkumulatoren sind nicht als Pouch-Zellen ausgeführt, die üblicherweise eine größere Volumenveränderung kompensieren können. Dafür können Akkumulatoren in zylindrischer Form leicht hergestellt und auch in großer Anzahl zu einem Modul verbunden werden.

In einer weiteren Ausführungsform der Erfindung weisen alle Akkumulatoren auf einer ersten Zylinderstirnfläche wenigstens zwei elektrische Kontakte auf. Durch die Anordnung beider elektrischen Kontakte ist zum einen die Fertigung zum anderen die Kontaktierung im fertigen Batteriemodul vereinfacht.

In einer weiteren Ausführungsform der Erfindung weisen alle Akkumulatoren auf einer zweiten Zylinderstirnfläche eine Berstmembran auf. Hierdurch ist eine gute Anordnung der zylindrischen Akkumulatoren möglich.

In einer weiteren Ausführungsform der Erfindung sind alle Akkumulatoren parallel zueinander angeordnet.

In einer weiteren Ausführungsform der Erfindung sind alle ersten Zylinderstirnflächen in die gleiche Richtung angeordnet.

In einer weiteren Ausführungsform der Erfindung weist das Modulgehäuse ein erstes Modulgehäuseteil und ein zweites Modulgehäuseteil auf. Das erste Modulgehäuseteil ist flächig ausgeführt und senkrecht zur Längsrichtung der Akkumulatoren angeordnet. Das zweite Modulgehäuseteil ist ebenfalls flächig ausgeführt und senkrecht zur Längsrichtung der Akkumulatoren angeordnet. Das zweite Modulgehäuseteil weist zweite Ausnehmungen zur Aufnahme jeweils eines Teils der Akkumulatoren im Bereich der zweiten Stirnflächen auf, wobei zwischen dem zweiten Modulgehäuseteil und den Berstmembranen der zweiten Zylinderstirnflächen jeweils ein Hohlraum angeordnet ist. Der Hohlraum kann beispielsweise und bevorzugt gasgefüllt, insbesondere luftgefüllt oder Schutzgas-gefüllt, insbesondere mit Stickstoff oder Argon gefüllt, sein.

In einer weiteren Ausführungsform der Erfindung ist ein dritter Sensor im Hohlraum angeordnet ist.

In einer weiteren Ausführungsform der Erfindung ist der dritte Sensor im Hohlraum angeordnet. Vorteil dieser Ausführungsform ist, dass exakt bekannt ist, bei welchem Akkumulator ein thermisches Durchgehen beobachtet wurde. Nachteilig ist, dass für jeden Akkumulator wenigstens ein eigener Sensor zusätzlich zu den beiden im Gaskanal befindlichen Sensoren benötigt wird.

Neben dem ersten Sensor ist ein zweiter Sensor angeordnet. Selbstverständlich können noch weitere Sensoren vorgesehen sein, um die Genauigkeit zu erhöhen und die Gefahr eines Fehlalarms zu verringern.

In einer weiteren Ausführungsform der Erfindung ist ein weiterer Sensor zur Erfassung einer chemischen Substanz ausgebildet ausgewählt aus der Gruppe umfassend Wasserstoff und Kohlenmonoxid. Dieses sind einfach detektierbare und beim thermischen Durchgehen entstehende Gase.

In einer weiteren Ausführungsform der Erfindung weist das zweite Modulgehäuseteil im Bereich der zweiten Ausnehmungen Berststellen auf. Bevorzugt weist das zweite Modulgehäuseteil wenigstens einen ersten Gaskanal auf, wobei der erste Gaskanal wenigsten die Berststelle des zweiten Modulgehäuseteils, welche hinter dem ersten Akkumulator angeordnet ist, und die Berststelle des zweiten Modulgehäuseteils, welche hinter dem zweiten Akkumulator angeordnet ist, auf der den Hohlräumen gegenüberliegenden Seite miteinander verbindet.

Der Gaskanal kann an der Unterseite geschlossen und an der Oberseite offen, durch ein Ventil verschlossen oder durch eine weitere Verschlussmembran geschlossen sein. Die Verschlussmembran kann derart ausgeführt sein, dass sie die Öffnung verschließt und bei austretendem Gas geöffnet wird. Es handelt sich beispielsweise um einen dünnen Klebefilm. Durch den beidseitigen Verschluss des Gaskanals wird in einer feuchten oder nassen Umgebung vermieden, dass sich Feuchtigkeit im Gaskanal sammelt.

Steigt der Druck im Hohlraum, welcher zu dem Akkumulator benachbart ist ansteigen, so führt dieser Druckanstieg dazu, dass auch die Berststelle im Bereich der zweiten Ausnehmungen des zweiten Modulgehäuse Teils birst, sodass die entstehenden Gase nach außen abgeführt werden und der Druck abgebaut wird, ohne dass weiterer Schaden erzeugt wird.

In einer weiteren Ausführungsform der Erfindung weist das erste Modulgehäuseteil erste Ausnehmungen zur Aufnahme jeweils eines Teils der Akkumulatoren im Bereich der ersten Stirnflächen auf, wobei das erste Modulgehäuseteil im Bereich der ersten Ausnehmungen Öffnungen zur Durchführung der elektrischen Verbindungen aufweist.

In einer weiteren Ausführungsform der Erfindung besteht das erste Modulgehäuseteil und das zweite Modulgehäuseteil aus einem faserverstärktem Kunststoff, insbesondere aus einem faserverstärktem Epoxid. Beispielsweise weist der Kunststoff eine Wärmeleitfähigkeit von mehr als 0,03 W / (m · K), bevorzugt mehr als 0,2 W / (m · K), weiter bevorzugt mehr als 0,5 W / (m . K), besonders bevorzugt mehr als 0,8 W / (m · K), auf. Auch wenn eine beliebig hohe Wärmeleitfähigkeit wünschenswert wäre, so weist jedoch realistisch der Kunststoff eine Wärmeleitfähigkeit auf, welche kleiner ist als 20 W / (m · K), wahrscheinlicher kleiner als 5 W / (m · K), noch wahrscheinlicher kleiner als 2 W / (m · K). Insbesondere wird die Wärmeleitfähigkeit gemäß ISO 8894-1 bestimmt.

In einer weiteren Ausführungsform der Erfindung ist zwischen dem ersten Modulgehäuseteil, den zweiten Modulgehäuseteil und den Akkumulatoren eine Vergussmasse angeordnet.

In einer weiteren Ausführungsform der Erfindung weist das Batteriemodul 20 bis 500, bevorzugt 50 bis 200, Akkumulatoren auf.

In einer weiteren Ausführungsform der Erfindung ragen die elektrischen Kontakte der Akkumulatoren durch Öffnungen der ersten Ausnehmungen in dem ersten Modulgehäuseteil aus dem Batteriemodul heraus.

In einer weiteren alternativen Ausführungsform der Erfindung werden die elektrische Kontakte mittels einer in dem ersten Modulgehäuseteil liegenden Sammelschiene elektrisch verbunden und so die Leistung aus dem Batteriemodul abgeführt. Hierzu weist das erste Modulgehäuseteil beispielsweise wenigstens eine erste Sammelschiene und wenigstens eine zweite Sammelschiene auf, um die beiden Pole zu kontaktieren. Dieses entspricht einer elektrischen Parallelschaltung. Alternativ können die Akkumulatoren auch in Reihe geschaltet werden, um eine höhere Ausgangsspannung zu erzielen. Nachteil hierbei ist, dass der Ausfall eines Akkumulators die elektrische Funktionalität unterbrechen würde. Es kann auch eine Kombination aus Reihenschaltung und Parallelschaltung vorgenommen sein.

In einer weiteren Ausführungsform der Erfindung bestehen das erste Modulgehäuseteil und das zweite Modulgehäuseteil aus einem faserverstärktem Kunststoff, insbesondere aus einem faserverstärktem Epoxid, insbesondere aus glasfaserverstärkten Epoxid.

In einem weiteren Aspekt betrifft die Erfindung einen Batteriestrang mit wenigstens einem ersten erfindungsgemäßen Batteriemodul und einem zweiten erfindungsgemäßen Batteriemodul. Besonders bevorzugt sind das erste Batteriemodul und das zweite Batteriemodul erfindungsgemäße Batteriemodule. Das erste Batteriemodul weist ein erstes Modul-Batteriemanagementsystem und das zweite Batteriemodul weist ein zweites Modul-Batteriemanagementsystem auf. Der Batteriestrang weist ein Strang-Batteriemanagementsystem auf. Das erste Modul-Batteriemanagementsystem liest den ersten Sensor und den zweiten Sensor des ersten Batteriemoduls aus. Das Auslesen erfolgt hierbei bevorzugt kontinuierlich, sodass nicht nur der aktuelle Wert des Sensors erfasst ist, sondern durch den zeitlichen Verlauf auch Veränderungen, insbesondere die Steigung eines Messwertes auswertbar ist. Die Steigung, also die Ableitung nach der Zeit, ist ein wichtiges Indiz für schnell ablaufende Prozesse, beispielsweise die Ankunft eines heißen Gases. Das zweite Modul-Batteriemanagementsystem liest den ersten Sensor und den zweiten Sensor des zweiten Batteriemoduls aus, ebenfalls bevorzugt kontinuierlich. Das erste Modul-Batteriemanagementsystem und das zweite Modul-Batteriemanagementsystem sind dazu ausgebildet, im Falle eines durch wenigstens einen Sensor detektierten Zwischenfalls, den Zwischenfall an das Strang-Batteriemanagementsystem zu melden, wobei das Strang-Batteriemanagementsystem dazu ausgebildet ist, den Batteriestrang im Falle eines Zwischenfalls in einem Batteriemodul von einem Netz zu trennen. Trennen bedeutet in diesem Zusammenhang, dass keine Energie vom Batteriemodul an das Netz abgegeben werden kann.

Insbesondere in der Anwendung in einem Unterseeboot werden die Akkumulatoren in einem Batteriemodul in Reihe geschaltet, um die hohe Spannung für das Fahrnetz zu erreichen. Bevorzugt werden sogar die Batteriemodule in einem Batteriestrang in Reihe geschaltet. Hierdurch führt die Zerstörung eines einzelnen Akkumulators dazu, dass die vollständige Abtrennung eines Batteriestranges zum Schutze des gesamten Energiespeichers und damit der Sicherheit des Unterseebootes vorteilhaft ist.

In einem weiteren Aspekt betrifft die Erfindung eine Energiespeichervorrichtung. Die Energiespeichervorrichtung weist einen Lastausgang zur Übergabe elektrischer Energie an wenigstens einen Verbraucher auf. Beispielsweise handelt es sich hierbei um eine Sammelschiene, welche die elektrische Energie von verschiedenen Akkumulatoren sammelt und an das Bordnetz beispielsweise eines Unterseebootes übergibt. Die Energiespeichervorrichtung weist wenigstens ein erstes erfindungsgemäßes Batteriemodul auf. Bevorzugt sind mehrere Module in Strängen gruppiert angeordnet. Weiter bevorzugt sind mehrere Stränge angeordnet. Ein Unterseeboot weist beispielsweise üblicherweise eine Energiespeichervorrichtung auf, welche etwa 10 bis 50 Stränge aufweist, wobei jeder Strang etwa 4 bis 10 Module aufweist. Ein Modul kann beispielsweise 20 bis 500 Akkumulatoren aufweisen.

In einer weiteren Ausführungsform der Erfindung sind in einem Raum wenigstens zwei erfindungsgemäße Batteriemodulen angeordnet. Ferner weist der Raum eine Infrarotkamera auf. Die Infrarotkamera ist in der Lage die Position eines thermischen Ereignisses so lokalisieren und somit das Batteriemodul zu identifizieren, in welchem das thermische Durchgehen eines Akkumulators erfolgt ist. Beispielsweise können so austretende warme Gase identifiziert werden, deren Temperatur nicht ausreicht, einen Sensor auszulösen, aber durch Wärme und Bewegung durch eine Infrarotkamera als Ereignis dennoch gut erfassbar ist. Hierdurch ist auch eine Ortsbestimmung des Ereignisses möglich, sodass das betroffene Batteriemodul identifiziert werden kann.

In einem weiteren Aspekt betrifft die Erfindung einen Batterieraum mit wenigstens einem ersten erfindungsgemäßen Batteriestrang, einem zweiten erfindungsgemäßen Batteriestrang und wenigstens ein elektrisches Netz. Der erste Batteriestrang ist aus erfindungsgemäßen Batteriemodulen aufgebaut und mit dem Netz verbindbar und ebenso ist der zweite Batteriestrang aus erfindungsgemäßen Batteriemodulen aufgebaut und mit dem Netz verbindbar. Bevorzugt ist ein Batteriestrand aus drei bis acht, bevorzugt fünf bis acht Batteriemodulen aufgebaut, welche bevorzugt in eine Reihenschaltung mit einander verbunden sind. Hierdurch kann eine hohe Ausgangsspannung, beispielsweise von 600 V bis 1.000 V, welche beispielsweise für einen Fahrmotor benötigt wird, erreicht werden. Bevorzugt sind im Batterieraum 20 bis 100, bevorzugt 40 bis 60 Batteriestränge angeordnet. Die Batteriestränge sind jeweils direkt mit dem Netz verbindbar und daher elektrisch parallel schaltbar. Hierdurch kann eine hohe Leistung, ein hoher Strom, bei der durch den Batteriestrang gegebenen Spannung, beispielsweise für einen Fahrmotor bereitgestellt werden. Außerdem können die Batteriestränge einzeln oder in Gruppen vom Netz getrennt oder mit diesem verbunden werden, je nachdem welche Leistung gerade benötigt wird. Der Batterieraum weist wenigstens einen ersten Raumsensor auf, wobei der zur Erfassung von Temperatur oder einer chemischen Substanz ausgebildet ist. Der Batterieraum weist eine Steuervorrichtung auf, wobei die Steuervorrichtung dazu ausgebildet ist, einen Batteriestrang von Netz zu trennen, wenn der erste Raumsensor einen Zwischenfall in dem Batteriestrang detektiert. Besonders bevorzugt weist der Batterieraum einen ersten Raumsensor auf, wobei der erste Raumsensor zur Erfassung von Kohlenmonoxid oder Wasserstoff ausgebildet ist, und einen zweiten Raumsensor, wobei der zweite Raumsensor eine Infrarotkamera ist. Diese Ausführungsform ist vorteilhaft, um auch Zwischenfälle zu detektieren, die vergleichsweise moderat ablaufen. Aufgrund der sehr geringen Hitzeentwicklung kann es sein, dass weder der erste Sensor noch der zweite Sensor des betroffenen Batteriemoduls einen Zwischenfall detektieren und auch der zweite Raumsensor diesen nicht erfasst. Durch die Detektion der chemischen Produkte eines solchen Prozesses durch den ersten Raumsensor kann dann jedoch immer noch ein Zwischenfall erfasst werden und anschließend der Ausgang des Gaskanals des Batteriemoduls aus den durch den zweiten Raumsensor erfassten Daten zu identifizieren, aus dem diese ausgetreten sein müssen. Hierdurch ist eine Erkennung auch ohne Übersteigen eines Temperaturschwellwertes oder eines schnellen Temperaturanstieges möglich.

In einem weiteren Aspekt betrifft die Erfindung ein Wasserfahrzeug mit einer erfindungsgemäßen Energiespeichervorrichtung. Bevorzugt handelt es sich bei dem Wasserfahrzeug um ein militärisches Wasserfahrzeug. Insbesondere ist das militärische Wasserfahrzeug ausgewählt aus der Gruppe umfassend Unterseeboot, Flugzeugträger, Hubschrauberträger, Kreuzer, Zerstörer, Fregatte, Korvette, Landungsschiffe, Minenleger, Minenräumfahrzeug, Minenjagdfahrzeug, Patrouillenboot, Schnellboot, Geleitboot, Luftkissenboot und Aufklärungsschiff. Besonders bevorzugt ist das militärische Wasserfahrzeug ausgewählt aus der Gruppe umfassend Unterseeboot, Kreuzer, Zerstörer, Fregatte, Korvette, Schnellboot und Geleitboot. Ganz besonders bevorzugt ist das militärische Wasserfahrzeug ein Unterseeboot.

In einem weiteren Aspekt betrifft die Erfindung ein Verfahren zur Detektion eines Zwischenfalls in einem erfindungsgemäßen Batteriemodul, besonders bevorzugt in einem erfindungsgemäßen Batteriemodul. Das Batteriemodul weist ein Modul-Batteriemanagementsystem auf, wobei des Modul-Batteriemanagementsystem zur Auslesung eines ersten Sensors und eines zweiten Sensors ausgebildet ist. Das Modul-Batteriemanagementsystem erfasst den zeitlichen Verlauf des ersten Sensors und den zeitlichen Verlauf des zweiten Sensors und detektiert aufgrund der Höhe und der Geschwindigkeit eines Signalanstieges bei wenigstens einem Sensor einen Zwischenfall. Erfindungsgemäß erfassen der erste Sensor und der zweite Sensor die Temperatur, wobei das Modul-Batteriemanagementsystem einen Zwischenfall feststellt, wenn wenigstens ein Sensor einen Anstieg über 50 °C bei einer Anstiegsrate von wenigstens 0,5 °C / s oder einen Anstieg über 150 °C unabhängig von der Anstiegsrate erfasst.

In einem weiteren Aspekt betrifft die Erfindung ein Verfahren zum Betrieb eines erfindungsgemäßen Batteriemoduls, wobei das Verfahren das regelmäßige Auslesen der Sensoren umfasst um im Falle der Registrierung eines Zwischenfalls das Batteriemodul abschaltet.

In einer weiteren Ausführungsform der Erfindung ein Verfahren zum Betrieb von mehreren Batteriemodulen, wobei im Falle der Registrierung eines Zwischenfalls das beschädigte Batteriemodul und das zur Bestmembran benachbarte Batteriemodul abschaltet werden.

Nachfolgend ist das erfindungsgemäße Batteriemodul anhand eines in den Zeichnungen dargestellten Ausführungsbeispiels näher erläutert.
- Fig. 1: Batteriemodul mit ersten Sensoren im Hohlraum
- Fig. 2: Batteriemodul mit erstem Sensor im Gaskanal
- Fig. 3: Batteriemodul mit erstem Sensor und zweitem Sensor im Gaskanal
- Fig. 4: Batteriemodul mit Sensoren in den Hohlräumen und im Gaskanal
- Fig. 5: Batteriestrang
- Fig. 6: Batterieraum

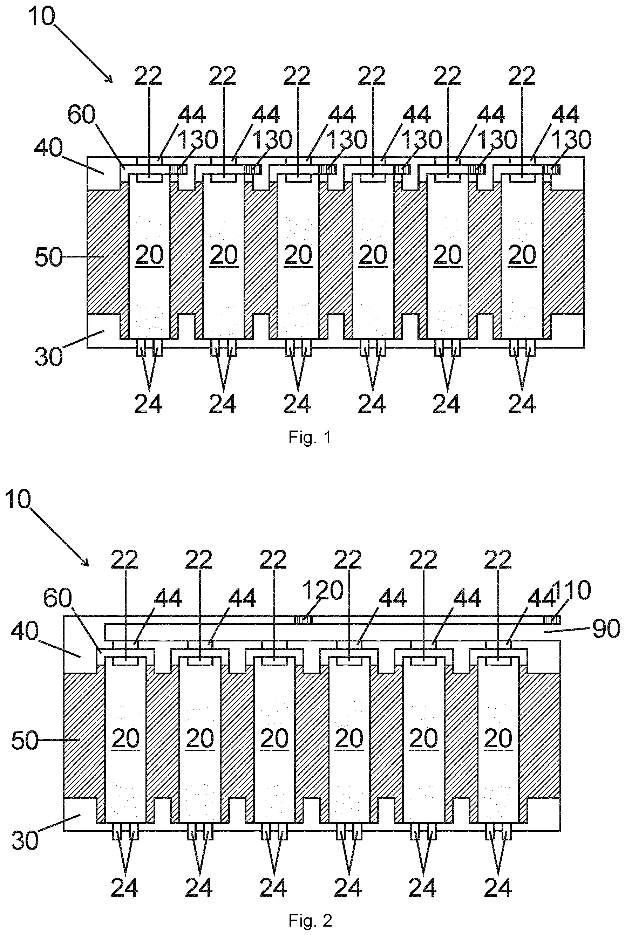

Fig. 1 bis Fig. 4 zeigen Batteriemodule 10, welche beispielhaft 6 Akkumulatoren 20 ausweisen. Die Akkumulatoren weisen auf der ersten Zylinderstirnfläche zwei elektrische Kontakte 24 auf. Auf der gegenüberliegenden zweiten Zylinderstirnfläche weisen die Akkumulatoren jeweils eine Berstmembran 22 auf. Alle Akkumulatoren 20 sind parallel nebeneinander angeordnet und weisen in die gleiche Richtung. Die Akkumulatoren 20 sind in einem Modulgehäuse angeordnet, wobei das Modulgehäuse ein erstes Modulgehäuseteil 30 und ein zweites Modulgehäuseteil 40 sowie dazwischen eine Vergussmasse 50 aufweist. Das zweite Modulgehäuseteil 40 weist jeweils der Berstmembran 22 der Akkumulatoren 20 gegenüberliegend eine Berststelle 44 des zweiten Modulgehäuseteils 40 auf, zwischen denen jeweils ein Hohlraum 60 angeordnet ist.

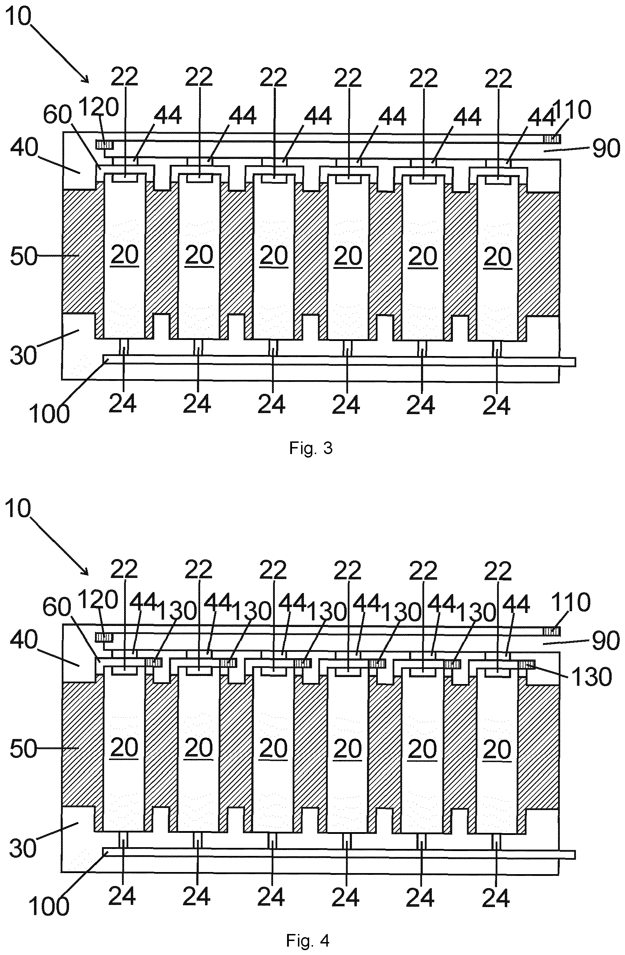

Fig. 1 zeigt ein erstes Beispiel eines Batteriemoduls 10, bei welchem in jedem Hohlraum 60 ein dritter Sensor 130 angeordnet ist. Der dritte Sensor 130 kann ein Drucksensor oder ein Temperatursensor sein. Optional können jeweils ein Drucksensor und ein Temperatursensor angeordnet sein. Auf diese Weise erfolgt eine Überwachung jedes Akkumulators 20. Das in Fig. 1 kann Teil eines erfindungsgemäßen Batteriemoduls 10 sein, wie beispielsweise in Fig. 4 gezeigt.

Fig. 2 zeigt ein zweites Beispiel, das zweite Modulgehäuseteil 40 einen Gaskanal 90 aufweist. Im Gaskanal 90 ist ein erster Sensor 110 angeordnet. Dieser misst die Temperatur. Je nachdem, welcher Akkumulator 20 beschädigt wird, kommt die Temperaturspitze mit einer anderen zeitlichen Verteilung beziehungsweise mit einem anderen Maximalwert beim ersten Sensor 110. Wird als Extremfall der Akkumulator 20 beschädigt, der dem ersten Sensor 110 an nächsten ist, so ist mit dem steilsten Anstieg und dem höchsten Maximalwert zu rechnen. Wird als weiterer Extremfall der Akkumulator 20 beschädigt, der dem ersten Sensor 110 an entferntesten ist, so ist mit dem schwächsten Anstieg und dem geringsten Maximalwert zu rechnen. Weiter ist im Gaskanal 90 ein zweiter Sensor 120 angeordnet, der etwa die halbe Länge des Gaskanals 90 vom ersten Sensor 110 beabstandet ist. Hierdurch können auch schwache thermische Effekte beispielsweise von dem ganz links gezeigten Akkumulator 20 mit dem zweiten Sensor 120 detektiert werden, wenn die thermischen Effekte zu schwach sein könnten, um vom ersten Sensor 110 am Ausgang des Gaskanals 90 sicher erfasst und als Zwischenfall erkannt zu werden.

Fig. 3 zeigt ein drittes Beispiel, das zweite Modulgehäuseteil 40 einen Gaskanal 90 aufweist. Zusätzlich weist dieses Beispiel eine Sammelscheine 100 auf, welche in dem ersten Modulgehäuseteil 30 angeordnet ist. Im Gaskanal 90 ist ein erster Sensor 110 am Ausgang und ein zweiter Sensor 120 am gegenüberliegenden Ende des Gaskanals 90 angeordnet. Messen beispielsweise der erste Sensor 110 und der zweite Sensor 120 den Druck (nicht Teil der Erfindung) so kann aus der Zeitdifferenz der gemessenen Maxima die Position des beschädigten Akkumulators 20 ermittelt werden.

Das in Fig. 4 gezeigte vierte Beispiel kombiniert das erste Beispiel und das dritte Beispiel. Es sind dritte Sensoren 130 in allen Hohlräumen 60 angeordnet. Zusätzlich sind ein zweiter Sensor 120 und ein erster Sensor 110 im Gaskanal 90 angeordnet, wobei der erste Sensor 110 am Ausgang des Gaskanals 90 angeordnet ist. Hierdurch wird eine hohe Präzision und Redundanz erreicht.

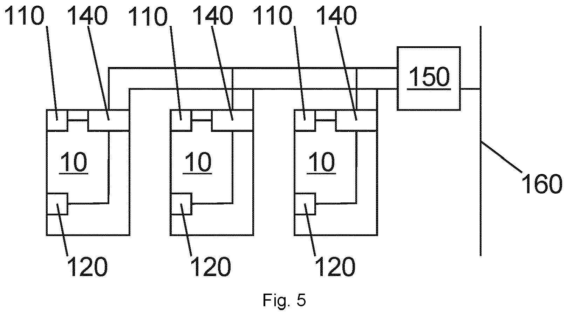

In Fig. 5 ist ein Batteriestrang gezeigt. Der Batteriestrang weist im gezeigten Beispiel drei Batteriemodule 10 auf, welche hier stark vereinfacht dargestellt sind. Jedes Batteriemodul 10 weist einen ersten Sensor 110 und einen zweiten Sensor 120 auf, Temperatursensoren, welche in einem hier zur Vereinfachung weggelassenem Gaskanal 90 angeordnet sind. Der erste Sensor 110 und der zweite Sensor 120 sind mit einem Modul-Batteriemanagementsystem 140 verbunden. Die drei Modul-Batteriemanagementsysteme 140 sind mit einem Strang-Batteriemanagementsystem 150 verbunden, wobei das Strang-Batteriemanagementsystem 150 dazu ausgebildet ist, die Verbindung zwischen den Batteriemodulen 10 und dem Netz 160 zu trennen.

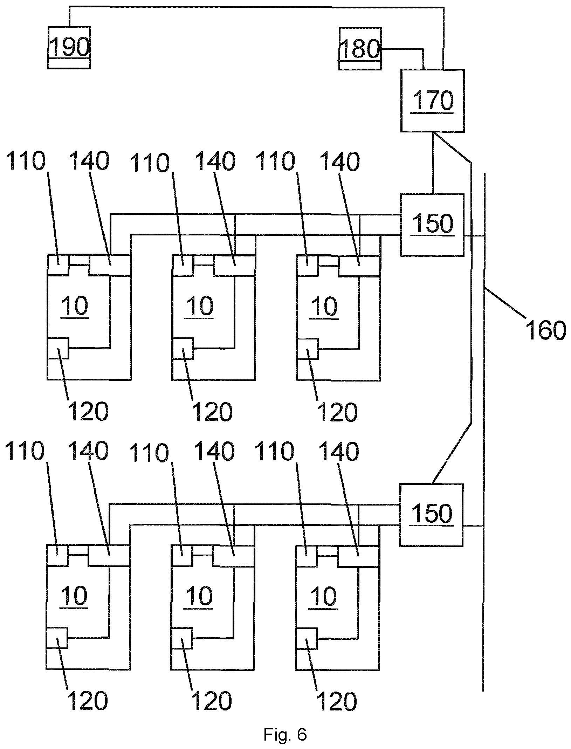

In Fig. 6 ist das Innere eines Batterieraumes gezeigt. Zur Vereinfachung weist der Batterieraum zwei identische, parallel geschaltete Batteriestränge auf, wie diese in Fig. 5 gezeigt sind. Zusätzlich weist der Batterieraum einen ersten Raumsensor 180, beispielsweise einen Kohlenmonoxid-Detektor auf. Dieser detektiert über das Vorhandensein von Kohlenmonoxid das Vorhandensein eines Zwischenfalls, der gegebenenfalls durch keinen der ersten Sensoren 110 und der zweiten Sensoren 120 detektiert wurde, beispielsweise, weil der entsprechende Akkumulator 20 aufgrund einer geringen Restkapazität nur eine geringe Erwärmung verursacht hat. Weiter weist der Batterieraum einen zweiten Raumsensor 190 auf, beispielsweise und insbesondere eine IR-Kamera. Mit Hilfe des zweiten Raumsensors 190 kann nach Detektion eines Zwischenfalls durch den ersten Raumsensor 180 nachträglich analysiert werden aus welchem Ausgang eines Gaskanals 90 von welchem Batteriemodul 10 eine auch nur sehr schwache Temperaturspitze, aber im Vergleich zu allen anderen Batteriemodulen 10 doch unterschiedliche Temperaturspitze erkennbar ist. Hierdurch kann das defekte Batteriemodul 10 identifiziert und durch das Steuerungsgerät 170 mittels des Strang-Batteriemanagementsystems 150 vom Netz 160 getrennt werden.

### Bezugszeichen

- 10: Batteriemodul
- 20: Akkumulator
- 22: Berstmembran des Akkumulators
- 24: elektrischer Kontakt
- 30: erstes Modulgehäuseteil
- 40: zweites Modulgehäuseteil
- 44: Berststelle des zweiten Modulgehäuseteils
- 50: Vergussmasse
- 60: Hohlraum
- 70: Abdichtung
- 90: Gaskanal
- 100: Sammelschiene
- 110: erster Sensor
- 120: zweiter Sensor
- 130: dritter Sensor
- 140: Modul-Batteriemanagementsystem
- 150: Strang-Batteriemanagementsystem
- 160: Netz
- 170: Steuervorrichtung
- 180: erster Raumsensor
- 190: zweiter Raumsensor

## Patentansprüche

1. Batteriemodul (10), wobei das Batteriemodul (10) wenigstens einen ersten Akkumulator (20) und einen zweiten Akkumulator (20) aufweist, wobei alle Akkumulatoren (20) wenigstens zwei elektrische Kontakte (24) aufweisen, wobei alle Akkumulatoren (20) eine Berstmembran (22) aufweisen, wobei alle Berstmembranen (22) in die gleiche Richtung angeordnet sind, wobei alle Akkumulatoren (20) in einem Modulgehäuse angeordnet sind, wobei wenigstens ein erster Sensor (110) in Wirkrichtung hinter der Berstmembran (22) der Akkumulatoren (20) angeordnet ist, wobei der erste Sensor (110) zur Erfassung der Temperatur ausgebildet ist, wobei das Modulgehäuse wenigstens einen ersten Gaskanal (90) aufweist, wobei der erste Gaskanal (90) in Wirkrichtung hinter den Berstmembranen (22) der Akkumulatoren (20) angeordnet ist, wobei der erste Sensor (110) und ein zweiter Sensor (120) im ersten Gaskanal angeordnet sind, wobei der zweite Sensor (120) zur Erfassung der Temperatur ausgebildet ist, wobei der erste Sensor (110) und der zweite Sensor (120) zueinander beabstandet im ersten Gaskanal (90) angeordnet sind, **dadurch gekennzeichnet, dass** der erste Sensor (110) am Ausgang des ersten Gaskanals (90) angeordnet ist, wobei der erste Sensor (110) und der zweite Sensor (120) wenigstens eine Distanz der halben Länge des ersten Gaskanals (90) aufweisen, wobei der erste Sensor (110) und der zweite Sensor (120) Temperatursensoren sind.

2. Batteriemodul (10) nach einem der vorstehenden Ansprüche, **dadurch gekennzeichnet, dass** alle Akkumulatoren (20) auf einer zweiten Zylinderstirnfläche eine Berstmembran (22) aufweisen.

3. Batteriemodul (10) nach einem der vorstehenden Ansprüche, **dadurch gekennzeichnet, dass** die Akkumulatoren (20) jeweils eine erste Stirnfläche und eine zweite Stirnfläche aufweisen, wobei das Modulgehäuse ein erstes Modulgehäuseteil (30) und ein zweites Modulgehäuseteil (40) aufweist, wobei das erste Modulgehäuseteil (30) flächig ausgeführt und senkrecht zur Längsrichtung der Akkumulatoren (20) angeordnet ist, wobei das zweite Modulgehäuseteil (40) flächig ausgeführt und senkrecht zur Längsrichtung der Akkumulatoren (20) angeordnet ist, wobei das zweite Modulgehäuseteil (40) zweite Ausnehmungen zur Aufnahme jeweils eines Teils der Akkumulatoren (20) im Bereich der zweiten Stirnflächen aufweist, wobei zwischen dem zweiten Modulgehäuseteil (40) und den Berstmembranen (22) der zweiten Zylinderstirnflächen jeweils ein Hohlraum (60) angeordnet ist.

4. Batteriemodul (10) nach Anspruch 3, **dadurch gekennzeichnet, dass** das zweite Modulgehäuseteil (40) im Bereich der zweiten Ausnehmungen Berststellen (44) aufweist.

5. Batteriemodul (10) nach Anspruch 4, **dadurch gekennzeichnet, dass** das zweite Modulgehäuseteil (40) wenigstens den ersten Gaskanal (90) aufweist, wobei der erste Gaskanal (90) wenigsten die Berststelle (44) des zweiten Modulgehäuseteils (40), welche hinter dem ersten Akkumulator (20) angeordnet ist, und die Berststelle (44) des zweiten Modulgehäuseteils (40), welche hinter dem zweiten Akkumulator (20) angeordnet ist, auf der den Hohlräumen gegenüberliegenden Seite miteinander verbindet.

6. Batteriemodul (10) nach einem der Ansprüche 3 bis 5, **dadurch gekennzeichnet, dass** das erste Modulgehäuseteil (30) erste Ausnehmungen zur Aufnahme jeweils eines Teils der Akkumulatoren (20) im Bereich der ersten Stirnflächen aufweist, wobei das erste Modulgehäuseteil (30) im Bereich der ersten Ausnehmungen Öffnungen zur Durchführung der elektrischen Verbindungen aufweist.

7. Batteriemodul (10) nach einem der Ansprüche 3 bis 6, **dadurch gekennzeichnet, dass** das erste Modulgehäuseteil (30) und das zweite Modulgehäuseteil (40) aus einem faserverstärktem Epoxid bestehen.

8. Batteriemodul (10) nach einem der Ansprüche 3 bis 7, **dadurch gekennzeichnet, dass** zwischen dem ersten Modulgehäuseteil (30), den zweiten Modulgehäuseteil (40) und den Akkumulatoren (20) eine Vergussmasse (50) angeordnet ist.

9. Batteriestrang mit wenigstens einem ersten Batteriemodul nach einem der vorstehenden Ansprüche und einem zweiten Batteriemodul nach einem der vorstehenden Ansprüche, wobei das erste Batteriemodul ein erstes Modul-Batteriemanagementsystem (140) und das zweite Batteriemodul ein zweites Modul-Batteriemanagementsystem (140) aufweist, wobei der Batteriestrang ein Strang-Batteriemanagementsystem aufweist, wobei das erste Modul-Batteriemanagementsystem (140) den ersten Sensor und den zweiten Sensor des ersten Batteriemoduls ausliest, wobei das zweite Modul-Batteriemanagementsystem (140) den ersten Sensor und den zweiten Sensor des zweiten Batteriemoduls ausliest, wobei das erste Modul-Batteriemanagementsystem (140) und das zweite Modul-Batteriemanagementsystem (140) dazu ausgebildet sind, im Falle eines durch wenigstens einen Sensor detektierten Zwischenfalls diesen an das Strang-Batteriemanagementsystem (150) zu melden, wobei das Strang-Batteriemanagementsystem (150) dazu ausgebildet ist, den Batteriestrang im Falle eines Zwischenfalls in einem Batteriemodul von einem Netz (160) zu trennen.

10. Batterieraum mit wenigstens einem ersten Batteriestrang nach Anspruch 9, einem zweiten Batteriestrang nach Anspruch 10 in wenigstens einem Netz (160), wobei der erste Batteriestrang mit dem Netz (160) verbindbar ist, wobei der zweite Batteriestrang mit dem Netz (160) verbindbar ist, wobei der Batterieraum wenigstens einen ersten Raumsensor (180) aufweist, wobei der zur Erfassung von Temperatur oder einer chemischen Substanz ausgebildet ist, wobei der Batterieraum eine Steuervorrichtung (170) aufweist, wobei die Steuervorrichtung (170) dazu ausgebildet ist, einen Batteriestrang von Netz (160) zu trennen, wenn der erste Raumsensor (180) einen Zwischenfall in dem Batteriestrang detektiert.

11. Verfahren zur Detektion eines Zwischenfalls in einem Batteriemodul nach einem der Ansprüche 1 bis 8, wobei das Batteriemodul ein Modul-Batteriemanagementsystem (140) aufweist, wobei des Modul-Batteriemanagementsystem (140) zur Auslesung eines ersten Sensors (110) und eines zweiten Sensors (120) ausgebildet ist, wobei das Modul-Batteriemanagementsystem (140) den zeitlichen Verlauf des ersten Sensors und den zeitlichen Verlauf des zweiten Sensors erfasst, wobei des Modul-Batteriemanagementsystem (140) aufgrund der Hohe und der Geschwindigkeit eines Signalanstieges bei wenigstens einem Sensor einen Zwischenfall detektiert.

12. Verfahren nach Anspruch 11, **dadurch gekennzeichnet, dass** der erste Sensor und der zweite Sensor die Temperatur erfassen, wobei das Modul-Batteriemanagementsystem (140) einen Zwischenfall feststellt, wenn wenigstens ein Sensor einen Anstieg über 50 °C bei einer Anstiegsrate von wenigstens 0,5 °C / s oder einen Anstieg über 150 °C unabhängig von der Anstiegsrate erfasst.

## Claims

1. Battery module (10), wherein the battery module (10) has at least one first accumulator (20) and one second accumulator (20), wherein all accumulators (20) have at least two electrical contacts (24), wherein all accumulators (20) have a bursting membrane (22), wherein all bursting membranes (22) are arranged in the same direction, wherein all accumulators (20) are arranged in a module housing, wherein at least one first sensor (110) is arranged behind the bursting membrane (22) of the accumulators (20) in the operating direction, wherein the first sensor (110) is designed to detect the temperature, wherein the module housing has at least one first gas channel (90), wherein the first gas channel (90) is arranged behind the bursting membranes (22) of the accumulators (20) in the operating direction, wherein the first sensor (110) and a second sensor (120) are arranged in the first gas channel, wherein the second sensor (120) is designed to detect the temperature, wherein the first sensor (110) and the second sensor (120) are arranged at a distance from one another in the first gas channel (90), **characterised in that** the first sensor (110) is arranged at the outlet of the first gas duct (90), the first sensor (110) and the second sensor (120) being at least half the length of the first gas duct (90), the first sensor (110) and the second sensor (120) being temperature sensors.

2. Battery module (10) according to one of the preceding claims, **characterised in that** all accumulators (20) have a bursting membrane (22) on a second cylinder end face.

3. Battery module (10) according to one of the preceding claims, **characterised in that** the accumulators (20) each have a first end face and a second end face, the module housing having a first module housing part (30) and a second module housing part (40), the first module housing part (30) being flat and arranged perpendicular to the longitudinal direction of the accumulators (20), wherein the second module housing part (40) has a flat design and is arranged perpendicular to the longitudinal direction of the accumulators (20), wherein the second module housing part (40) has second recesses for receiving a respective part of the accumulators (20) in the region of the second end faces, wherein a respective cavity (60) is arranged between the second module housing part (40) and the bursting diaphragms (22) of the second cylinder end faces.

4. Battery module (10) according to claim **3characterised in that** the second module housing part (40) has bursting points (44) in the region of the second recesses.

5. Battery module (10) according to claim **4characterised in that** the second module housing part (40) has at least the first gas channel (90), wherein the first gas channel (90) connects at least the bursting point (44) of the second module housing part (40), which is arranged behind the first accumulator (20), and the bursting point (44) of the second module housing part (40), which is arranged behind the second accumulator (20), to one another on the side opposite the cavities.

6. Battery module (10) according to one of the claims 3 to **5characterised in that** the first module housing part (30) has first recesses for receiving in each case a part of the accumulators (20) in the region of the first end faces, wherein the first module housing part (30) has openings in the region of the first recesses for passing through the electrical connections.

7. Battery module (10) according to one of the claims 3 to **6characterised in that** the first module housing part (30) and the second module housing part (40) consist of a fibre-reinforced epoxy.

8. Battery module (10) according to one of the claims 3 to **7characterised in that** a potting compound (50) is arranged between the first module housing part (30), the second module housing part (40) and the accumulators (20).

9. Battery string comprising at least a first battery module according to one of the preceding claims and a second battery module according to one of the preceding claims, wherein the first battery module comprises a first module battery management system (140) and the second battery module comprises a second module battery management system (140), wherein the battery string comprises a string battery management system, wherein the first module battery management system (140) reads the first sensor and the second sensor of the first battery module, wherein the second module battery management system (140) reads out the first sensor and the second sensor of the second battery module, wherein the first module battery management system (140) and the second module battery management system (140) are designed to report an incident detected by at least one sensor to the string battery management system (150), wherein the string battery management system (150) is designed to disconnect the battery string from a network (160) in the event of an incident in a battery module.

10. Battery room with at least a first battery string according to claim 9a second battery string according to claim 9 in at least one network (160), wherein the first battery string can be connected to the network (160), wherein the second battery string can be connected to the network (160), wherein the battery room has at least one first room sensor (180), which is designed to detect temperature or a chemical substance, wherein the battery room has a control device (170), wherein the control device (170) is designed to disconnect a battery string from the network (160) when the first room sensor (180) detects an incident in the battery string.

11. Method for detecting an incident in a battery module according to one of the claims 1 to 8wherein the battery module has a module battery management system (140), wherein the module battery management system (140) is designed to read out a first sensor and a second sensor, wherein the module battery management system (140) detects the time characteristic of the first sensor and the time characteristic of the second sensor, wherein the module battery management system (140) detects an incident on the basis of the level and the speed of a signal increase in at least one sensor.

12. Method according to claim 11**characterised in that** the first sensor and the second sensor detect the temperature, wherein the module battery management system (140) detects an incident when at least one sensor detects a rise above 50°C at a rise rate of at least 0.5°C/s or a rise above 150°C regardless of the rise rate.

## Revendications

1. Module de batterie (10), dans lequel le module de batterie (10) a au moins un premier accumulateur (20) et un deuxième accumulateur (20), dans lequel tous les accumulateurs (20) ont au moins deux contacts électriques (24), dans lequel tous les accumulateurs (20) ont une membrane d'éclatement (22), dans lequel toutes les membranes d'éclatement (22) sont disposées dans la même direction, dans lequel tous les accumulateurs (20) sont disposés dans un boîtier de module, dans lequel au moins un premier capteur (110) est disposé derrière la membrane d'éclatement (22) des accumulateurs (20) dans la direction de fonctionnement, dans lequel le premier capteur (110) est conçu pour détecter la température, dans lequel le boîtier de module a au moins un premier canal de gaz (90), dans lequel le premier canal de gaz (90) est disposé derrière les membranes d'éclatement (22) des accumulateurs (20) dans la direction de fonctionnement, dans lequel le premier capteur (110) et un second capteur (120) sont disposés dans le premier canal de gaz, dans lequel le second capteur (120) est conçu pour détecter la température, dans lequel le premier capteur (110) et le second capteur (120) sont disposés à distance l'un de l'autre dans le premier canal de gaz (90), **caractérisé en ce que** le premier capteur (110) est disposé à la sortie du premier conduit de gaz (90), le premier capteur (110) et le second capteur (120) étant au moins à la moitié de la longueur du premier conduit de gaz (90), le premier capteur (110) et le second capteur (120) étant des capteurs de température.

2. Module de batterie (10) selon l'une des revendications précédentes, **caractérisé par le fait que** tous les accumulateurs (20) possèdent une membrane d'éclatement (22) sur une deuxième face d'extrémité du cylindre.

3. Module de batterie (10) selon l'une des revendications précédentes, **caractérisé en ce que** les accumulateurs (20) ont chacun une première face d'extrémité et une deuxième face d'extrémité, le boîtier du module ayant une première partie de boîtier de module (30) et une deuxième partie de boîtier de module (40), la première partie de boîtier de module (30) étant plate et disposée perpendiculairement à la direction longitudinale des accumulateurs (20), dans laquelle la deuxième partie du boîtier du module (40) a un design plat et est disposée perpendiculairement à la direction longitudinale des accumulateurs (20), dans laquelle la deuxième partie du boîtier du module (40) a des deuxièmes évidements pour recevoir une partie respective des accumulateurs (20) dans la région des deuxièmes faces d'extrémité, dans laquelle une cavité respective (60) est disposée entre la deuxième partie du boîtier du module (40) et les membranes d'éclatement (22) des deuxièmes faces d'extrémité des cylindres.

4. Module de batterie (10) selon la revendication **3caractérisé par le fait que** la deuxième partie du boîtier du module (40) présente des points de rupture (44) dans la région des deuxièmes évidements.

5. Module de batterie (10) selon la revendication **4caractérisé en ce que** la deuxième partie du boîtier du module (40) a au moins le premier canal de gaz (90), dans lequel le premier canal de gaz (90) relie au moins le point d'éclatement (44) de la deuxième partie du boîtier du module (40), qui est disposée derrière le premier accumulateur (20), et le point d'éclatement (44) de la deuxième partie du boîtier du module (40), qui est disposée derrière le deuxième accumulateur (20), l'un à l'autre sur le côté opposé aux cavités.

6. Module de batterie (10) selon l'une des revendications 3 à **5caractérisé en ce que** la première partie du boîtier du module (30) présente des premiers évidements pour recevoir dans chaque cas une partie des accumulateurs (20) dans la région des premières faces d'extrémité, dans laquelle la première partie du boîtier du module (30) présente des ouvertures dans la région des premiers évidements pour passer à travers les connexions électriques.

7. Module de batterie (10) selon l'une des revendications 3 à **6caractérisé par le fait que** la première partie du boîtier du module (30) et la deuxième partie du boîtier du module (40) sont constituées d'un époxy renforcé de fibres.

8. Module de batterie (10) selon l'une des revendications 3 à **7caractérisé par le fait qu'**une masse d'enrobage (50) est disposée entre la première partie du boîtier du module (30), la deuxième partie du boîtier du module (40) et les accumulateurs (20).

9. Chaîne de batteries comprenant au moins un premier module de batterie selon l'une des revendications précédentes et un deuxième module de batterie selon l'une des revendications précédentes, dans laquelle le premier module de batterie comprend un système de gestion de la batterie du premier module (140) et le deuxième module de batterie comprend un système de gestion de la batterie du deuxième module (140), dans laquelle la chaîne de batteries comprend un système de gestion de la batterie de la chaîne, dans laquelle le système de gestion de la batterie du premier module (140) lit le premier capteur et le deuxième capteur du premier module de batterie, dans lequel le système de gestion de la batterie du deuxième module (140) lit le premier capteur et le deuxième capteur du deuxième module de batterie, dans lequel le système de gestion de la batterie du premier module (140) et le système de gestion de la batterie du deuxième module (140) sont conçus pour signaler un incident détecté par au moins un capteur au système de gestion de la batterie de la chaîne (150), dans lequel le système de gestion de la batterie de la chaîne (150) est conçu pour déconnecter la chaîne de batteries d'un réseau (160) en cas d'incident dans un module de batterie.

10. Salle de batteries avec au moins une première chaîne de batteries selon la revendication 9une deuxième chaîne de batteries selon la revendication 9 dans au moins un réseau (160), dans lequel la première chaîne de batteries peut être connectée au réseau (160), dans lequel la deuxième chaîne de batteries peut être connectée au réseau (160), dans lequel la salle des batteries possède au moins un premier capteur de salle (180), qui est conçu pour détecter la température ou une substance chimique, dans lequel la salle des batteries possède un dispositif de contrôle (170), dans lequel le dispositif de contrôle (170) est conçu pour déconnecter une chaîne de batteries du réseau (160) lorsque le premier capteur de salle (180) détecte un incident dans la chaîne de batteries.

11. Procédé de détection d'un incident dans un module de batterie selon l'une des revendications 1 à 8dans lequel le module de batterie comporte un système de gestion de la batterie du module (140), dans lequel le système de gestion de la batterie du module (140) est conçu pour lire un premier capteur et un second capteur, dans lequel le système de gestion de la batterie du module (140) détecte la caractéristique temporelle du premier capteur et la caractéristique temporelle du second capteur, dans lequel le système de gestion de la batterie du module (140) détecte un incident sur la base du niveau et de la vitesse d'augmentation d'un signal dans au moins un capteur.

12. Méthode selon la revendication 11**caractérisé par le fait que** le premier capteur et le second capteur détectent la température, dans lequel le système de gestion de la batterie du module (140) détecte un incident lorsqu'au moins un capteur détecte une augmentation supérieure à 50°C à une vitesse d'augmentation d'au moins 0,5°C/s ou une augmentation supérieure à 150°C quelle que soit la vitesse d'augmentation.
